# EUROPEAN PATENT APPLICATION

(11) **EP 2 108 867 A2**
(43) Date of publication of application: **14.10.2009**
(21) Application number: 09156362.7
(22) Date of filing: 26.03.2009
(51) Int. Cl.: F16K 3/24, F16K 47/08

(54) **Switch valve for exhaust gas turbocharger system**

(30) Priority: 11.04.2008 US 101399
(71) Applicant: Honeywell International Inc., Morristown, NJ 07962 (US)
(72) Inventor: Yin, Junfei, Bedford, Bedfordshire MK43 0HQ (GB); Renued, Philippe, 88390 Sanchey (FR); Peng, Yuan, Shanghai (CN)
(74) Representative: Buckley, Guy Julian

(57) **Abstract**

A switch valve for an exhaust gas-driven turbocharger system comprises a valve body defining an inlet passage, an outlet passage, and a generally annular volute in fluid communication with the outlet passage via a plurality of openings extending generally radially inwardly from the volute. A valve seat is disposed adjacent the outlet passage. A movable valve member is slidable between an open position spaced from the valve seat and a closed position engaged with the valve seat. The volute is bounded on a radially outer side by an outer wall extending about the circumference of the volute. The inlet passage enters into the volute at a first circumferential location. At a second circumferential location diametrically opposite from the first circumferential location, the volute has a dam presenting a substantial impediment to circumferential flow.

## Description

### BACKGROUND OF THE INVENTION

The present disclosure relates generally to valves for fluids, and relates more particularly to valves for regulating the flow of exhaust gases emitted by an internal combustion engine.

Turbocharger systems are frequently used for boosting the performance of internal combustion engines. A simple turbocharger system employs a single exhaust gas-driven turbocharger having a turbine wheel mounted on the same shaft as a compressor wheel. The turbine and compressor wheels are disposed within respective turbine and compressor housings. Exhaust gas from the engine is fed into a volute defined by the turbine housing, and the exhaust gas flows through the turbine wheel, which is thereby driven to provide power for driving the compressor wheel. Air compressed by the compressor wheel is fed to the engine air intake. The increased pressure of the intake air increases the amount of power and torque that can be developed by the engine.

When the amount of pressurization or boost required is greater than can be delivered by a single turbocharger, two-stage turbocharger systems are often employed. In a two-stage turbocharger system, a first turbocharger is arranged with its turbine either in series or in parallel with the turbine of a second turbocharger. In a series system, exhaust gas from the engine first flows through the turbine of the first turbocharger, and then flows through the turbine of the second turbocharger. In a parallel system, the two turbines are arranged to receive exhaust gas via parallel exhaust lines.

In both series and parallel systems, typically a switch valve is provided for selectively preventing or allowing exhaust gas to flow to one of the turbines. When the boost deliverable by one of the turbochargers is adequate for providing the desired level of boost, the valve is either opened or closed (depending on the system architecture) so that exhaust gas is substantially prevented from flowing through the other turbine. Conversely, when a high level of boost is required, the valve is either closed or opened so that exhaust gas flows to both turbines.

Two-stage turbocharger systems are advantageous in that they are capable of providing high engine torque down to relatively low engine speeds, and are capable of good transient response at low speeds. However, the responsiveness and efficiency of the switch valve are crucial factors in being able to realize these capabilities. The valve must also be reliable.

### BRIEF SUMMARY OF THE DISCLOSURE

The present disclosure relates to a switch valve designed to meet some or all of these needs. In accordance with one aspect of the disclosure, a switch valve for use in an exhaust gas-driven turbocharger system comprises a valve body defining an inlet passage extending along a first axis, an outlet passage extending along a second axis that is non-parallel to the first axis, and a generally annular volute surrounding the second axis and in fluid communication with the outlet passage via a plurality of openings extending from the volute generally radially inwardly relative to the second axis. The inlet passage enters into the volute at a first circumferential location of the volute. The flow path defined by the volute has a radial height.

The valve body further defines a substantially cylindrical bore having a bore axis generally aligned with the second axis of the outlet passage, and a valve seat disposed between the cylindrical bore and the outlet passage. A movable valve member is disposed in the bore and is slidable therein along the bore axis between an open position spaced from the valve seat and a closed position engaged with the valve seat. In the open position fluid is free to flow from the volute through the openings to the outlet passage, but in the closed position the valve member substantially prevents fluid from flowing through the openings to the outlet passage.

In accordance with the present disclosure, the volute is effectively divided into two substantially half-annular portions each subtending approximately 180° of arc about the second axis. More particularly, at a second circumferential location substantially diametrically opposite from the first circumferential location where the inlet passage enters, the volute includes a "dam" that presents a substantial blockage or impediment to flow in the circumferential direction. The dam in one embodiment comprises a projection extending generally radially inwardly from the outer wall of the volute.

In one embodiment, the dam comprises a smoothly curved portion of the outer wall that bulges radially inwardly. The volute thus has a generally heart-shaped cross-section along a plane perpendicular to the second axis.

In one embodiment, the dam faces one of the openings, and advantageously is directly aligned with one of the openings.

In one embodiment, the openings are spaced apart about the circumference of the volute, and there are a plurality of circumferentially spaced support arms between the openings.

In a particular embodiment, one of the support arms faces the inlet passage. Advantageously, the support arm facing the inlet passage is positioned to be impacted by fluid entering through the inlet passage, and serves to divert the fluid to opposite sides of said support arm in generally circumferentially opposite directions into the volute.

In accordance with one embodiment, the valve body defines three openings and three support arms, the openings and support arms collectively occupying the entire circumference of the volute. Alternatively, a different number of openings and support arms can be provided. Advantageously, each opening has a circumferential length exceeding a circumferential length of each support arm.

In one embodiment, the valve body is made up of at least a valve housing and a separately formed insert or cartridge. The valve housing defines the inlet passage, the outlet passage, and the volute, and the insert defines the bore, the valve seat, the openings, and the support arms.

The insert can include a first insert portion defining the valve seat, the openings, and the support arms, and a separately formed second insert portion defining the bore. The second insert portion can comprise a generally annular or tubular liner installed in a generally cylindrical hole defined by the first insert portion. Alternatively, the entire insert can be a unitary one-piece member.

The arrangement of the valve, with the volute having the dam diametrically opposite from the support arm that faces the inlet, is predicted to provide a substantial improvement in terms of total pressure loss between inlet and outlet, relative to a similar valve having a circular or annular volute with no dam.

### BRIEF DESCRIPTION OF THE SEVERAL VIEWS OF THE DRAWING(S)

Having thus described the disclosure in general terms, reference will now be made to the accompanying drawings, which are not necessarily drawn to scale, and wherein:

FIG. 1 is an isometric view of a valve in accordance with one embodiment of the present invention, showing the valve partly sectioned to reveal internal details;

FIG. 2 is a cross-sectional view of the valve of FIG. 1;

FIG. 3 is another partly sectioned isometric view of the valve of FIG. 1;

FIG. 4 is a cross-sectional view along line 4-4 in FIG. 2;

FIG. 5 is a view looking into the inlet passage of the valve as indicated by line 5-5 in FIG. 2; and

FIG. 6 is a cross-sectional view similar to FIG. 4, showing an alternative embodiment.

### DETAILED DESCRIPTION OF THE DRAWINGS

The present invention now will be described more fully hereinafter with reference to the accompanying drawings in which some but not all embodiments of the inventions are shown. Indeed, these inventions may be embodied in many different forms and should not be construed as limited to the embodiments set forth herein; rather, these embodiments are provided so that this disclosure will satisfy applicable legal requirements. Like numbers refer to like elements throughout.

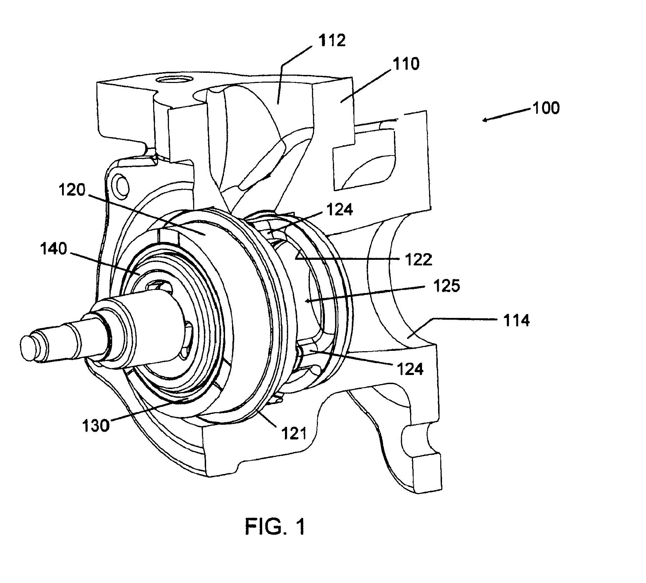

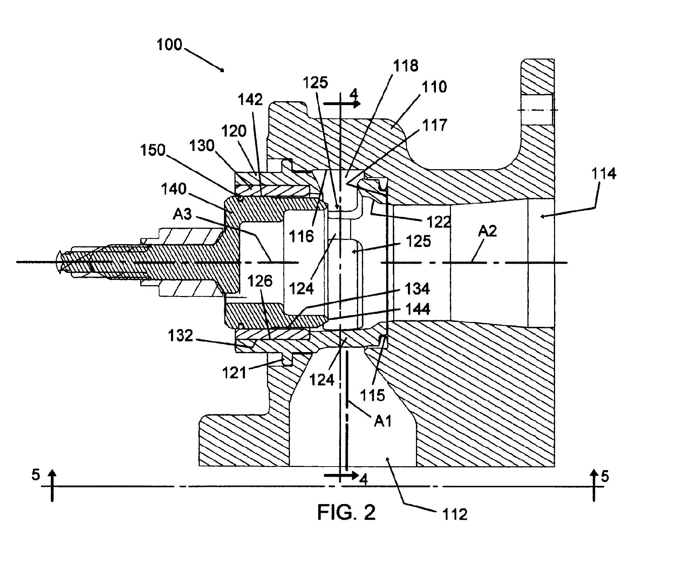

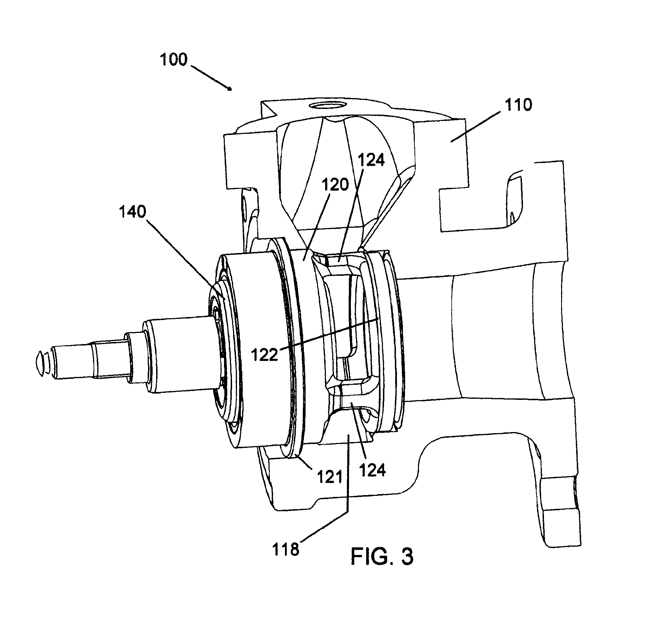

A switch valve **100** in accordance with one embodiment of the present invention is depicted in FIGS. 1 through 5. The valve is useful for regulating the flow of a fluid, and is particularly useful for regulating the flow of exhaust gases from an internal combustion engine, as part of a turbocharger system connected with the engine. The valve's major components include a valve housing **110,** a cartridge or insert **120,** a liner **130,** and a movable valve member **140.** The valve housing **110** defines an inlet passage **112** that extends into the valve housing along a first axis **A1** (FIG. 2), and an outlet passage **114** that extends out from the valve housing along a second axis **A2.** The first axis **A1** is non-parallel to the second axis **A2,** and in the illustrated embodiment these axes are perpendicular to each other. The angle between the first axis **A1** and the second axis **A2** can be about 90° to 135°. The inlet passage **112** connects at its radially inner end ("radially" being defined with respect to the second axis **A2**) with the outlet passage **114,** such that fluid entering the valve housing through the inlet passage **112** can flow out through the outlet passage **114** (when the valve is in the open position as described below).

The valve housing **110** also defines a generally cylindrical hole **116** that extends out of the valve housing on a side thereof generally opposite from the side at which the outlet passage **114** exits from the valve housing. The hole **116** has an axis **A3** that is at least generally aligned with the second axis **A2** of the outlet passage **114,** these axes being collinear in the illustrated embodiment.

The insert **120** has a generally tubular configuration and is installed in the hole **116** in the valve housing, a central axis of the insert being substantially aligned with the axis **A3** of the hole. The insert defines a radially outwardly projecting ring or flange **121** that abuts a shoulder defined by the hole **116,** as best seen in FIG. 2, thereby axially positioning the insert relative to the valve housing. The distal end of the insert defines a valve seat **122** having a surface able to make sealing contact with the distal end of the valve member **140.** The distal end of the insert advantageously is spaced a slight distance from an axially facing surface **117** (FIG. 2) defined by the valve housing, and a resiliently compressible sealing ring **115** is axially compressed between the distal end of the insert and the surface **117,** as generally described in commonly assigned International Patent Application Publication No. WO 2007/024226 A1 published on March 1, 2007, entitled "Decoupled Housing Seat", the disclosure of which is incorporated herein by reference.

The insert **120** further comprises a plurality of circumferentially spaced support arms **124** connected to the valve seat **122** and extending generally axially therefrom in a direction away from the outlet passage **114.** A plurality of openings **125** are defined between the support arms **124.** Fluid entering the valve through the inlet passage **112** can flow through the openings **125** in order to reach the outlet passage **114,** unless the valve is closed as described below. Each support arm **124** has a circumferential length smaller than, and preferably substantially smaller than, a circumferential length of each opening **125.**

The valve housing **110** further defines a generally annular volute **118** that surrounds the insert **120** and is in fluid communication with the openings **125** therein. The inlet passage **112** leads into the volute **118** at one circumferential location of the volute's circumference. Accordingly, fluid is supplied through the inlet passage **112** to the volute **118,** and the fluid fills the volute so that fluid can flow through all of the openings **125** to the outlet passage **114** when the valve is open.

The opposite ends of the support arms **124** from the valve seat **122** are connected to a further portion of the insert formed as a tube defining a central passage having a cylindrical inner surface **126.** The flange **121** projects from the outer surface of this portion of the insert. The liner **130** is a tubular structure having a cylindrical outer surface **132.** The liner is fixedly secured in the central passage of the insert. For example, the outer surface **132** of the liner can form an interference fit with the inner surface **126** of the insert, and the liner can be press-fit into the insert. The liner defines a cylindrical inner surface **134** having a smooth surface finish such that it is capable of making a sealed interface with the movable valve member **140.**

The valve member **140** has a substantially cylindrical outer surface **142** slightly smaller in diameter than the inner surface **134** of the liner **130,** and is disposed within the liner and insert substantially coaxially therewith. A sealing ring **150** is retained in a groove formed in the valve member's outer surface **142,** and seals against the inner surface **134** of the liner. Accordingly, the valve member **140** can be moved axially relative to the insert and liner while maintaining a sealed interface with the liner. The distal end of the valve member **140** defines a surface **144** configured for making a sealed engagement with the valve seat **122** when the valve member is in a closed position. In this closed position, the valve member **140** prevents fluid from flowing through the openings **125** in the insert to the outlet passage **114** of the valve housing. Conversely, when the valve member **140** is moved away from the valve seat (FIG. 2), fluid is free to flow through the openings **125** to the outlet passage **114.**

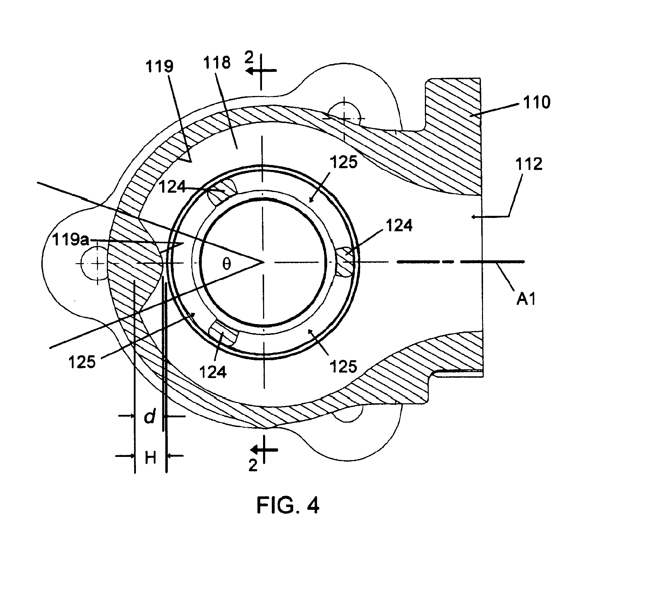

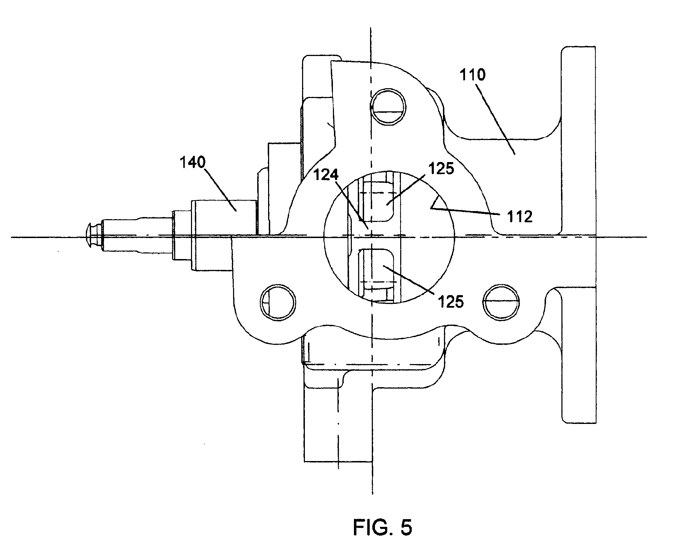

Thus far in the description of the valve **100,** the valve is generally similar to the valve described in the aforementioned WO 2007/024226 A1 publication. The valve **100** differs from that valve, however, in a number of respects, as now described with primary reference to FIGS. 4 and 5. The generally annular volute **118** is bounded on its radially outer side by an outer wall **119.** The outer wall **119** extends along a generally circular path about the second axis **A2** of the outlet passage (although it need not have a constant radius about its circumference). However, at a location substantially diametrically opposite from the location where the inlet passage **112** enters the volute **118,** the outer wall **119** has a localized portion **119a** that bulges radially inwardly to a smaller radius than the remainder of the outer wall. This gives the volute a generally heart-shaped configuration in cross-section as shown in FIG. 4. The portion **119a** has a sufficient radial height ***d*** to present a substantial blockage or impediment to flow in the circumferential direction. Accordingly the portion **119a** serves as a "dam" for the circumferential flow, and thus effectively divides the volute into two substantially half-annular portions. It is preferred that the dam **119a** face one of the openings **125.**

As an example, the dam **119a** has a radial height ***d*** that is about 70% to 100% of the volute's flow path height **H.** The dam **119a** is localized to a relatively small fraction of the total circumference of the outer wall. For example, in the illustrated embodiment, the portion **119a** occupies an angle θ (FIG. 4) of approximately 40°. More generally, the dam **119a** can occupy an angle in a range of about 5° to about 120°. Thus, the dam can be a smoothly curved portion of the outer wall as shown, or can be an abrupt projection such as a flat plate or the like. The dam is centered at a location substantially diametrically opposite from the inlet passage **112,** although a small deviation (± 5°) from that location is permissible.

In addition to the presence of the dam **119a,** the valve **100** is also characterized by one of the support arms **124** of the insert **120** being located so that it faces the inlet passage **112** of the valve, as shown in FIGS. 4 and 5. In the illustrated embodiment, the support arm **124** is directly aligned with the central axis **A1** of the inlet passage. Thus, the inlet passage **112** enters the volute **118** at a first circumferential location and is aligned with the support arm **124,** and the dam **119a** of the volute is located at a second circumferential location substantially diametrically opposite from the first circumferential location. Because of the positioning of the support arm in line with the inlet passage, fluid entering through the inlet passage and impinging on the support arm is diverted to both sides of the support arm so that the flow about the volute **118** is more uniform circumferentially than would otherwise be the case.

According to computational fluid dynamics analyses of the fluid flow through the valve **100,** the inclusion of the dam in the volute is predicted to lead to a significant reduction in total pressure loss of the fluid flowing through the valve, compared to an otherwise similar valve not having the dam. It is theorized that the dam prevents a large vortex (with attendant large pressure loss) from forming near the centerline of the valve, instead leading to the formation of several smaller vortices with smaller pressure losses.

Many modifications and other embodiments of the inventions set forth herein will come to mind to one skilled in the art to which these inventions pertain having the benefit of the teachings presented in the foregoing descriptions and the associated drawings. For example, in the illustrated embodiment the valve housing **110** and insert **120** are separate members collectively forming a valve body. Alternatively, however, a single integral (one-piece) valve body could be used.

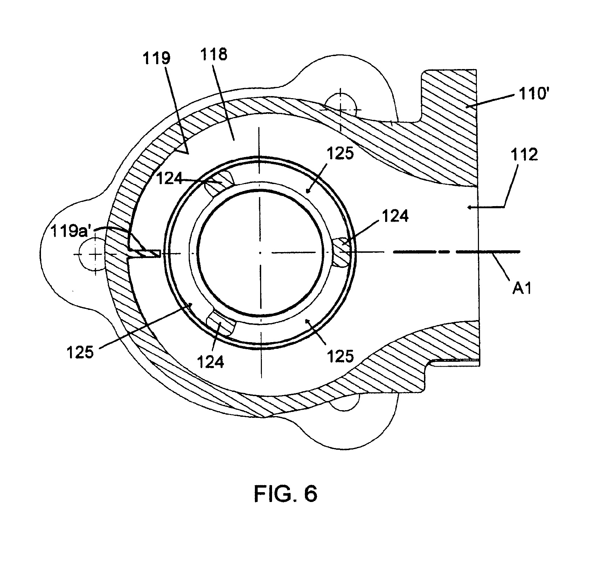

Additionally, as noted, the dam **119a** in FIG. 4 is a smoothly curved portion of the outer wall **119,** but alternatively the dam can have other configurations. As an example, an alternative embodiment is shown in FIG. 6. This embodiment is generally similar to that of FIG. 4, except for the configuration of the dam **119a'.** The dam **119a'** is configured generally as a flat plate. Various other dam configurations can also be used.

Therefore, it is to be understood that the inventions are not to be limited to the specific embodiments disclosed and that modifications and other embodiments are intended to be included within the scope of the appended claims. Although specific terms are employed herein, they are used in a generic and descriptive sense only and not for purposes of limitation.

## Claims

1. A switch valve for use in an exhaust gas-driven turbocharger system, comprising:
a valve body defining an inlet passage extending along a first axis, an outlet passage extending along a second axis that is non-parallel to the first axis, and a generally annular volute surrounding the second axis and in fluid communication with the outlet passage via a plurality of openings extending from the volute generally radially inwardly relative to the second axis, the inlet passage entering into the volute at a first circumferential location of the volute;
the valve body further defining a substantially cylindrical bore having a bore axis generally aligned with the second axis of the outlet passage, the bore being spaced from the outlet passage in a direction opposite to a direction along which fluid flows out of the valve through the outlet passage, and a valve seat disposed between the cylindrical bore and the outlet passage; and
a movable valve member disposed in the bore and slidable therein along the bore axis between an open position spaced from the valve seat and a closed position engaged with the valve seat, fluid being free to flow from the volute through the openings to the outlet passage in the open position, the valve member substantially preventing fluid from flowing through the openings to the outlet passage in the closed position;
wherein the volute includes a dam located at a second circumferential location substantially diametrically opposite from the first circumferential location, the dam presenting a substantial impediment to flow in a circumferential direction.

2. The switch valve of claim 1, wherein the dam faces one of the openings.

3. The switch valve of claim 1, wherein the openings are spaced apart about the circumference of the volute and there are a plurality of circumferentially spaced support arms between the openings.

4. The switch valve of claim 3, wherein one of the support arms faces the inlet passage.

5. The switch valve of claim 4, wherein the support arm facing the inlet passage is positioned to be impacted by fluid entering through the inlet passage, and serves to divert the fluid to opposite sides of said support arm in generally circumferentially opposite directions into the volute.

6. The switch valve of claim 3, wherein the valve body defines three openings and three support arms, the openings and support arms collectively occupying the entire circumference of the volute.

7. The switch valve of claim 3, wherein each opening has a circumferential length exceeding a circumferential length of each support arm.

8. The switch valve of claim 3, wherein the valve body is made up of at least a valve housing and a separately formed insert, the valve housing defining the inlet passage, the outlet passage, and the volute, and the insert defining the bore, the valve seat, the openings, and the support arms.

9. The switch valve of claim 8, wherein the insert includes a first insert portion defining the valve seat, the openings, and the support arms, and a separately formed second insert portion defining the bore.

10. The switch valve of claim 9, the second insert portion comprising a generally annular liner installed in a generally cylindrical hole defined by the first insert portion.

11. The switch valve of claim 1, wherein the dam occupies an angle of about 5° to 120° about the second axis.

12. The switch valve of claim 1, wherein the dam has a radial height equivalent to about 70% to 100% of a radial height of the volute at locations other than the dam.

13. The switch valve of claim 8, wherein the insert has a distal end defining the valve seat, the distal end of the insert being axially spaced from a surface of the valve housing, and further comprising a resiliently compressible sealing ring disposed between the distal end of the insert and said surface of the housing.

14. The switch valve of claim 1, wherein the dam comprises a smoothly curved inwardly bulged portion of an outer wall of the volute.

15. The switch valve of claim 1, wherein the dam comprises an abrupt projection from an outer wall of the volute, extending radially inwardly therefrom.
